# EUROPEAN PATENT APPLICATION

(11) **EP 1 871 011 A1**
(43) Date of publication of application: **26.12.2007**
(21) Application number: 06731421.1
(22) Date of filing: 07.04.2006
(51) Int. Cl.: H04B 1/10

(54) **NOISE CANCELER**

(30) Priority: 14.04.2005 JP 2005117589
(71) Applicant: Pioneer Corporation, Tokyo 153-8654 (JP)
(72) Inventor: KOSUGA, Tadashi, Pioneer Corporation, Kawagoe-shi, Saitama 350-8555 (JP)
(74) Representative: Haley, Stephen
(86) International application number: PCT/JP2006/307474
(87) International publication number: WO 2006/112280

(57) **Abstract**

A signal line noise detection circuit 12N detects a component included in an input signal to a noise canceller 19 which is estimated as being noise. At the same time as this detection, a power supply noise detection circuit 12P detects power supply line noise which reflects the state of operation of items of electrical equipment which could constitute a source of nose mixed in with an antenna signal etc. The result of detection by the signal line noise detection circuit 12N and the result of detection by the power supply line noise detection circuit 12P, obtained in this manner, are added together with weightings by amplification circuits 13N and 13P and an addition circuit 14. The noise component included in the input signal to the noise canceller 19 is eliminated by the operation of a gate circuit 16, according to the level of a gate control signal which is generated by a waveform shaping circuit 15 based upon the result of this weighted addition.

## Description

### Technical Field

The present invention relates to a noise canceller which eliminates a noise component included in an input signal.

### Background Art

From the past one type of signal processing device which has been widely used is the signal receiving device, of which a radio receiver may be taken as a representative example. Among this type of receiving device, in particular, one which is mounted in a vehicle such as an automobile or the like can easily be influenced by noise which contains a high frequency component, such as ignition noise or the like. Because of this, it is generally practiced to provide a noise canceller which eliminates such noise including a high frequency component, so as to maintain the quality of the audio and so on (refer to Patent Document #1; in the following this will be termed the "prior art example").

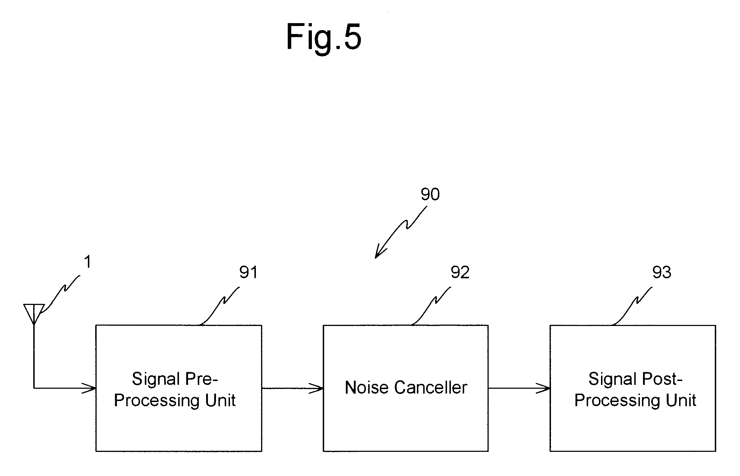

The configuration of a receiving device 90 which is an example of this type of prior art is schematically shown in Fig. 5. As shown in Fig. 5, this receiving device 90 comprises (a) an antenna 1 which receives radio waves from externally, (b) a signal pre-processing unit 91 (hereinafter also termed "a front stage circuit") which processes the signals induced in the antenna 1, (c) a noise canceller 92 which eliminates a noise component in the signal which has been processed by the signal pre-processing unit 91, and (d) a signal post-processing unit 93 (hereinafter also termed "a rear stage circuit") which processes the signal in which noise has thus been eliminated by the noise canceller 92.

Here, if the receiving device 90 is a radio receiver, there are included in the signal pre-processing unit 91 a high frequency (HF) amplification circuit for amplifying the broadcast signal induced in the antenna 1, a mixer unit for converting the frequency of this signal which has been amplified by the above high frequency amplification circuit to an intermediate frequency (MF), an intermediate frequency amplification circuit for amplifying this intermediate frequency signal, a detection circuit which performs detection based upon this intermediate frequency signal which has thus been amplified, and the like. Furthermore, a low frequency (LF) amplification circuit and a speaker are included in the signal post-processing unit 93.

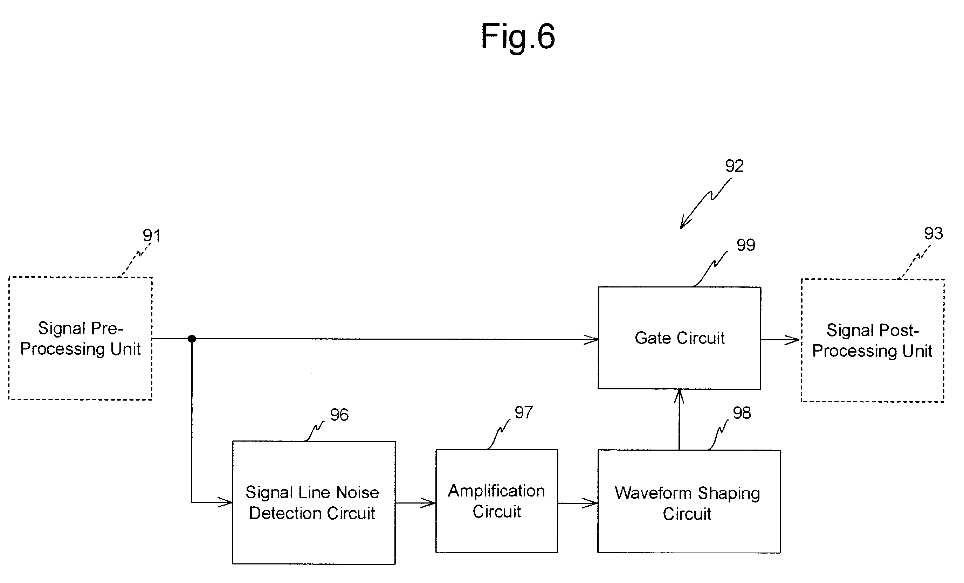

As shown in Fig. 6, the noise canceller 92 comprises (i) a signal line noise detection (SLND) circuit 96 which detects a noise component in the input signal from the signal pre-processing unit 91, (ii) an amplification circuit 97 which amplifies the noise signal detected by the signal line noise detection circuit 96, (iii) a waveform shaping circuit 98 which outputs a gate control signal whose level changes according to whether or not the result of amplification by the amplification circuit 92 is greater than or equal to a predetermined magnitude, and (iv) a gate circuit 99 which controls whether or not the signal from the signal pre-processing unit 91 is outputted just as it is or not, according to the level of the gate control signal from the waveform shaping circuit 98.

Here, if the receiving device 90 is a radio receiver, then the signal line noise detection circuit 96 is built to include a high pass filter, since it is required to eliminate the high frequency noise component in the noise canceller 92. Furthermore, the waveform shaping circuit 98 includes a rectification circuit which rectifies the result of amplification by the amplification circuit 97, and a comparison circuit which decides whether or not the level of the rectified signal which is the result of rectification by the rectification circuit is greater than or equal to a reference voltage. Due to this, the gate control signal goes to the gate blocking level in periods in which the amplitude of the high frequency component in the input signal from the signal pre-processing unit 91 is large, while the gate control signal goes to gate open level the gate control signal goes to the gate open level in periods in which the amplitude of the high frequency component in the input signal from the signal pre-processing unit 91 is small. It should be understood that a technique has also been proposed in which, in order reliably to eliminate noise in pulse form, the periods in which the gate control signal goes to the gate blocking level are changed according to the conditions of reception of the broadcast waves (refer to Patent Document #1).

Moreover the gate circuit 99 includes a sample and hold circuit, and, along with outputting the signal from the signal pre-processing unit 91 just as it is without alteration when the gate control signal is at the gate open level, also is adapted, when the gate control signal is at the gate blocking level, continuously to output the signal level from the signal pre-processing unit 91 directly before the gate control signal went to the gate blocking level. It should be understood that a technique has also been proposed in which change in the level of the signal from the signal pre-processing unit 91 while the gate control signal is at the gate blocking level is forecast by the gate circuit, and a signal which indicates the forecast change is outputted (refer to Patent Document #2).

Patent Document #1: Japanese Laid-Open Patent Publication H8-56168
Patent Document #2: Japanese Laid-Open Patent Publication 2003-69435

### Disclosure of Invention

### Problem to be Solved by The Invention

The techniques of the above described prior art examples are ones which perform elimination of noise components based upon the input signal to the noise canceller, and which excel from the point of view of performing elimination of noise components in pulse form in a simple manner. However, the noise component which is superimposed upon the input signal to the noise canceller is not limited to being a noise component in pulse form; for example, when the receiving device is a radio receiver, sometimes it is not possible to distinguish between the modulation component and the noise component in the broadcast wave.

Furthermore, in the case of an onboard radio receiver or the like, there is a tendency towards increase of the types and the number of electrical equipment disposed around the receiver, which are electrically operated devices, and accordingly the amount of noise originating in the operation of this electrical equipment also tends to increase. In order to cope with this tendency, it has been considered to lower the reference voltage of the waveform shaping circuit 98 of the above described noise canceller 92, or the like, so as to increase the noise cancellation sensitivity of the noise canceller 92. However, if the noise cancellation sensitivity is simply increased, then the rate of occurrence is increased of the state of affairs in which a component which properly ought to be passed through the noise canceller 92, such as the modulation component in the broadcast wave and so on, also comes to be eliminated, which is undesirable.

The present invention has been conceived in consideration of the circumstances described above, and it takes it as its object to provide a noise canceller which can eliminate the noise component in the input signal in a logical manner.

### Means for Solving Problem

The noise canceller of the present invention is a noise canceller which eliminates a noise component included in an input signal comprising: a signal line noise detection means which detects a component included in said input signal which is estimated as being noise; a noise environment detection means which detects the operational state of at least one of electrical devices which could constitute a cause for superimposition of noise upon said input signal; a correction means which corrects the result of detection by said signal line noise detection means, using the result of detection by said noise environment detection means; and a noise elimination means which eliminates a noise component included in an input signal, based upon the result of correction by said correction means.

With this noise canceller, the signal line noise detection means detects a component included in the input signal to the noise canceller which is estimated as being noise. At the same time as this detection of a component which is estimated as being noise, the noise environment detection means detects the operational state of electrical devices which could constitute a cause for superimposition of noise upon said input signal, for example of the electrical devices which are arranged adjacent to the receiving device. The correction means corrects the result of detection by the signal line noise detection means, using the result of detection by the noise environment detection means. Moreover, the noise elimination means eliminates a noise component included in the input signal, based upon the result of correction by said correction means obtained in this manner. As a result, noise elimination is performed while changing the noise cancellation sensitivity according to the result of detection of the noise environment, i.e. of the operational state of the electrical device which is provided adjacent to the receiving device.

With the noise canceller of the present invention, said noise environment detection means may be adapted to detect noise upon a power supply line for supply of electrical power for the operation of said electrical device; and said noise environment detection means may also be adapted to detect change of an electrical current flowing in a power supply line for supply of electrical power for the operation of said electrical device. Here, the correction means may be adapted to perform weighted addition of the result of detection by said noise environment detection means and the result of detection by said signal line noise detection means.

Furthermore, with the noise canceller of the present invention, the noise environment detection means may be adapted to detect whether or not each of said electrical devices is powered up. And here, the correction means may be adapted to add amounts corresponding to those ones among said electrical devices which are powered up, to the result of detection by said signal line noise detection means.

### Brief Description of Drawings

Fig. 1 is a figure schematically showing the configuration of a radio receiver which incorporates a noise canceller according to a first embodiment of the present invention, also showing the configuration peripheral thereto;
Fig. 2 is a figure for explanation of the configuration of the noise canceller of Fig. 1;
Fig. 3 is a figure schematically showing the configuration of a radio receiver which incorporates a noise canceller according to a second embodiment of the present invention, also showing the configuration peripheral thereto;
Fig. 4 is a figure for explanation of the configuration of the noise canceller of Fig. 3;
Fig. 5 is a figure schematically showing the configuration of an example of a receiving device according to the prior art; and
Fig. 6 is a figure for explanation of the configuration of the prior art noise canceller of Fig. 5.

### Best Mode for Carrying Out The Invention

### - EMBODIMENT ONE -

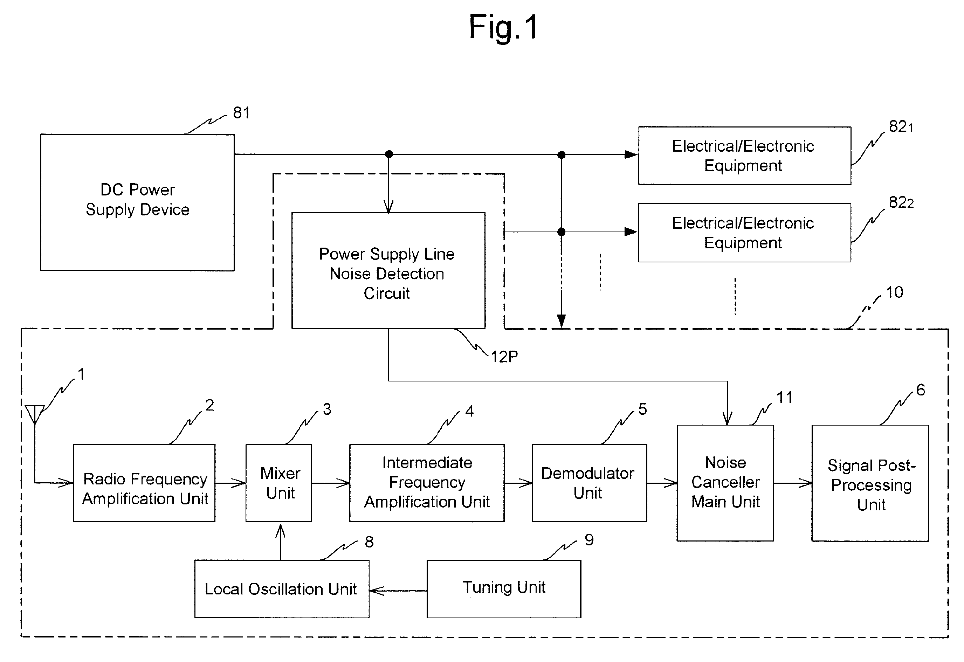

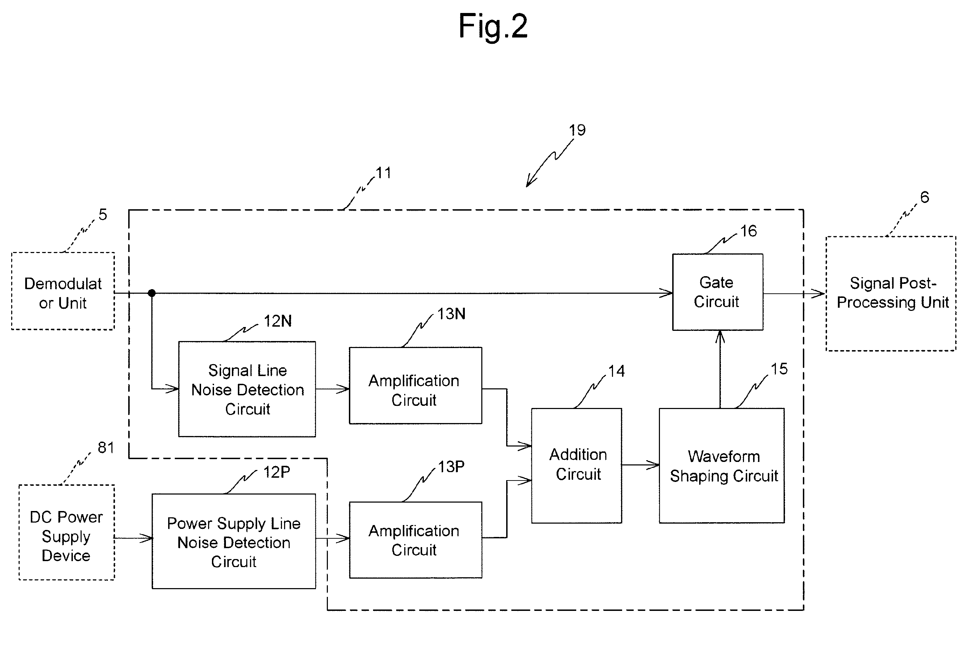

In the following, a first embodiment of the present invention will be explained with reference principally to Figs. 1 and 2.

In Fig. 1, there is shown the configuration of an onboard radio receiver 10 which is equipped with a noise canceller according to the first embodiment of the present invention, and the configuration of certain devices peripheral to the radio receiver 10 is also shown. As shown in Fig. 1, a DC power supply device 81 (a battery or the like) and various items of electrical equipment 82₁, 82₂, ... which are electrical devices are disposed peripheral to this radio receiver.

This radio receiver 10 comprises: (a) an antenna; (b) a radio frequency amplification unit 2 which amplifies a signal induced in the antenna 1; (c) a tuning unit 9 for the user to perform channel tuning; (d) a local oscillation unit 8 which oscillates to produce a signal of a frequency corresponding to the result of channel tuning in the tuning unit 9; and (e) a mixer unit 3 which mixes together the result of amplification by the radio frequency amplification unit 2 and the signal generated by the local oscillation unit 8. Here, frequency conversion from the signal at the frequency of the broadcast wave to a signal at an intermediate frequency is performed by the local oscillation unit 8 and the mixer unit 3.

Furthermore, the radio receiver 10 comprises: (f) an intermediate frequency amplification unit 4 which amplifies the intermediate frequency signal from the mixer unit 3; and (g) a demodulation unit 5 which performs detection (AM detection or FM detection) of the signal from the intermediate frequency amplification unit 4 It should be understood that, if this radio receiver 10 is an FM radio receiver, the intermediate frequency also amplification unit 4 includes an amplitude limitation circuit (a limiter).

Yet further, this radio receiver 10 comprises: (h) a power supply line noise detection circuit (PLND) 12P which detects noise voltage fluctuation upon the power supply line; and (i) a noise canceller main unit 11 which eliminates the noise component included in the signal detected by the demodulation unit 5 while referring to the result of detection by the power supply line noise detection circuit 12P. Here, the power supply line noise detection circuit 12P is disposed adjacent to a terminal of the DC power supply device 81 which supplies electrical power for operation. It should be understood that the noise canceller 19 (refer to Fig. 2) consists of the power supply noise detection circuit 12P and the noise canceller main unit 11. The configuration of this noise canceller 19 will be described in detail hereinafter.

Even further, this radio receiver 10 comprises: (j) a signal post-processing unit 6 which processes the output signal from the noise canceller main unit 11. If the radio receiver 10 is an FM stereo receiver, then this signal post-processing unit 6 comprises a stereo demodulation circuit, a de-emphasis circuit, a low frequency amplification circuit, speakers, and the like. Furthermore, if the radio receiver 10 is an FM monaural receiver, then this signal post-processing unit 6 comprises a de-emphasis circuit, a low frequency amplification circuit, a speaker, and the like. Moreover, if the radio receiver 10 is an AM receiver, then this signal post-processing unit 6 comprises a low frequency amplification circuit, a speaker, and the like.

The power supply line noise detection circuit 12P comprises a high pass filter. This is due to the fact that the power supply line noise which is generated in accompaniment with the operation of the electrical equipment items 82₁, 82₂, ... is high frequency noise. It should be understood that it is supposed that the power supply line noise which is due to the operation of the radio receiver 10 is quite low. Furthermore, if it is decided that there is a correlation between the magnitude of the component in some specified frequency band of the power supply line noise, and the magnitude of the noise component included in the signal which is the result of detection by the demodulation unit 5, then it is desirable for the power supply line noise detection circuit 12P to include a band pass filter which passes through a signal of that specified frequency band.

As shown in Fig. 2, the noise canceller main unit 11 comprises: (i) a signal line noise detection circuit 12N which detects a component in the input signal from the demodulation unit 5 which it estimates to be noise; and (ii) an amplification circuit 13N which amplifies the result of detection by this signal line noise detection circuit 12N. Here, this signal line noise detection circuit 12N and amplification circuit 13N are constructed in a manner which is similar to that of the signal line noise detection circuit 96 and the amplification circuit 97 of the prior art example described above. It should be understood that it will be supposed that the signal amplification ratio of the amplification circuit 13N is K₀.

Furthermore, the noise canceller main unit 11 comprises: (iii) an amplification circuit 13P which amplifies the power supply line noise signal which has been detected by the power supply line noise detection circuit 12P; and (iv) an addition circuit 14 which adds together the output signal from the amplification circuit 13N and the output signal from the amplification circuit 13P. Here if there is a possibility that, due to the addition calculation by the addition circuit 14, accidental mutual cancellation between the output signal from the amplification circuit 13N and the output signal from the amplification circuit 13P may occur in the long term, then it is desirable for the amplification circuit 13P to include a rectification circuit which rectifies the result of its amplification. It should be understood that the ratio between the amplification ratio K₁ and the signal amplification ratio K₀ of the above described amplification circuit 13N is determined by experiment or simulation or the like, from the point of view of elimination of the noise component by the entire noise canceller 19 in a logical manner.

Furthermore, the noise canceller main unit 11 comprises: (v) a waveform shaping circuit 15 which changes the level of the gate control signal and outputs it, according as to whether or not the result of addition by the addition circuit 14 is greater than or equal to a predetermined magnitude; and (vi) a gate circuit 16 which controls whether or not the signal from the demodulation unit 5 is outputted just as it is, according to the level of the gate control signal from the waveform shaping circuit 15. Here, this waveform shaping circuit 15 and gate circuit 16 are constructed in a manner which is similar to that of the waveform shaping circuit 98 and gate circuit 99 of the prior art example described above.

Next, the signal processing performed by the radio receiver 10 having the configuration described above will be explained, with emphasis being principally directed upon the operation of elimination of the noise component by the noise canceller 19.

The signal which is induced in the antenna 1 by the received broadcast waves and the like, after being amplified by the radio frequency amplification unit 2, is mixed with the local oscillation signal by the mixer unit 3 and is frequency converted to an intermediate frequency. The intermediate frequency signal which has been obtained in this manner is detected by the demodulation unit 5, after having been amplified by the intermediate frequency amplification unit 4. And the signal which is the result of this detection by the demodulation unit 5 is inputted to the noise canceller main unit 11.

In parallel with the processing of the signal induced in the antenna 1 in this manner, the noise voltage in the power supply line is detected by the power supply line noise detection circuit 12P. Here, if none of the items of electrical equipment 82₁, 82₂, ... is connected to electrical power so that none of these items of electrical equipment 82₁, 82₂, ... is operating, then the result of amplification by the amplification circuit 13P is presumably small, since the result of detection by the power supply line noise detection circuit 12P is quite small. As a result, the result of the addition by the addition circuit 14 is almost equal to the result of detection by the signal line noise detection circuit 12N and amplification by the amplification circuit 13N. Due to this, if none of the items of electrical equipment 82₁, 82₂, ... is operating, then elimination of the noise component is performed by this noise canceller 19 with a similar noise cancellation sensitivity to that in the case of the prior art example described above.

If connection of at least one of the items of electrical equipment 82₁, 82₂, ... to the electrical power is commenced, then, when this item of electrical equipment 82₁, 82₂, ... which has been connected to the electrical power operates, a power supply line noise will be generated corresponding to the mode of operation thereof. The voltage change of the power supply line noise created in this manner is detected by the power supply line noise detection circuit 12P, and is amplified by the amplification circuit 13P. The result of this amplification by the amplification circuit 13P is added by the addition circuit 14 to the result of amplification by the amplification circuit 13N after detection by the signal line noise detection circuit 12N. In other words, the result of addition by the addition circuit 14 is a value which takes into consideration the operation of the item or item of electrical equipment 82₁, 82₂, ..., which could become a source of noise mixed into the signal from the radio receiver 10 (in particular, into the signal from the antenna 1).

After rectification of the result of addition obtained in this manner, the waveform shaping circuit 15 compares together the level of this rectification result and a reference voltage. If the level of the result of rectification is less than the reference voltage, then the waveform shaping circuit 15 outputs a gate control signal which is set to the gate open level. On the other hand, if the level of the result of rectification is greater than or equal to the reference voltage, then the waveform shaping circuit 15 outputs a gate control signal which is set to the gate blocking level.

The gate circuit 16 determines the mode of the output signal to the signal post-processing unit 6 according to the level of the gate control signal which is outputted in this manner from the waveform shaping circuit 15. In other words, if the gate control signal is at the gate open level, then the gate circuit 16 outputs the signal from the demodulation unit 5 just as it is. Furthermore, if the gate control signal is at the gate blocking level, then the gate circuit 16 continues to output the signal level from the demodulation unit 5 directly before the gate control signal went to the gate blocking level.

As explained above, with the noise canceller 19 of this embodiment, the signal line noise detection circuit 12N detects the estimated noise component included in the input signal to the noise canceller main unit 11. At the same time as this estimated noise component is being detected, the power supply line noise detection circuit 12P detects the power supply line noise voltage. This power supply line noise voltage reflects the so called noise environment due to the operational state of the various items of electrical equipment 82₁, 82₂, ... which can constitute sources of noise mixed into the signal from the antenna 1 and so on, and by extension reflects the probability of superimposition of noise upon the output signal from the demodulation unit 5.

The result of detection by the signal line noise detection circuit 12N and the result of detection by the power supply line noise detection circuit 12P, which have been obtained in this manner, are added together with weightings by the amplification circuits 13N and 13P and the addition circuit 14. The noise component which is included in the input signal to the noise canceller main unit 11 is eliminated by the operation of the gate circuit 16, according to the level of the gate control signal generated by the waveform shaping circuit 15 based upon the above result.

In other words, the noise cancellation sensitivity by the noise canceller 19 is changed according to the result of detection of the noise environment by the power supply line noise detection circuit 12P. Accordingly, with the noise canceller 19 of this embodiment, it is possible to eliminate the noise component in the input signal in a logical manner.

It should be understood that although, in the first embodiment described above, the noise environment in the input signal to the noise canceller 19 is detected by detecting the noise voltage upon the power supply line, it would also be possible to arrange to perform this detection by detecting change of the current flow amount flowing out from the DC power supply device 81. In this case, it would be sufficient to insert a low resistance in the power supply line from the DC power supply device 81, and to input the voltage generated between the two ends of this low resistance to the amplification circuit 13P described above. It should be understood that in this case, from the point of view of elimination of the noise component by the entire noise canceller 19 in a logical manner, the amplification ratio of the amplification circuit 13P would be determined by experiment or by simulation or the like, just as in the case of the first embodiment described above.

Furthermore although, in the above described first embodiment, it was arranged for the amplification circuit 13P to be arranged within the noise canceller main unit 11, if it is easy for noise to become mixed into the signal path from the power supply line noise detection circuit 12P to the amplification circuit 13P, then it is desirable to provide a configuration in which the amplification circuit 13P is arranged as closely approached to the power supply line noise detection circuit 12P.

### - EMBODIMENT TWO -

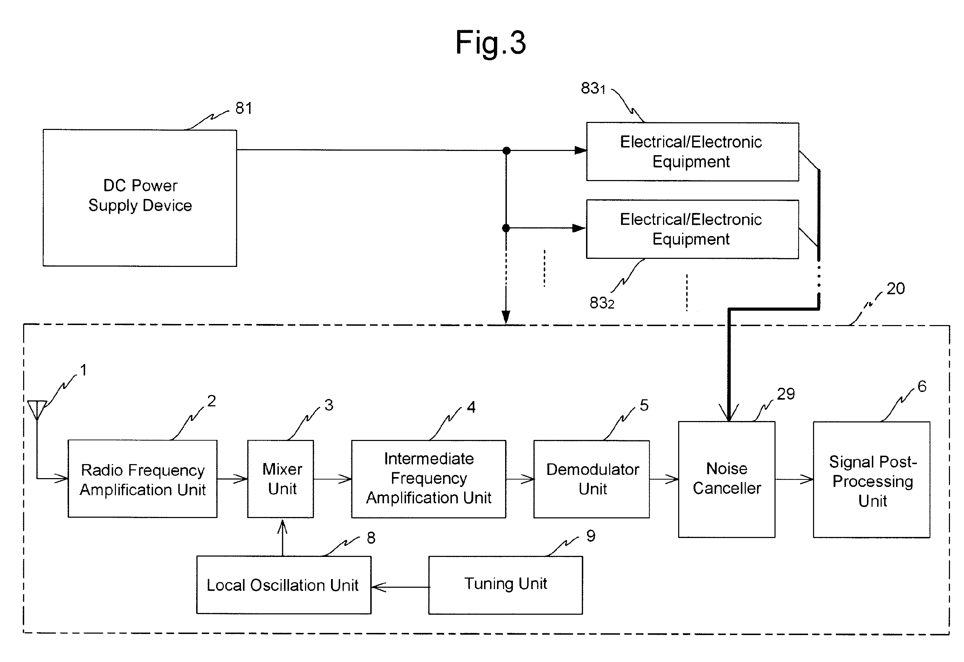

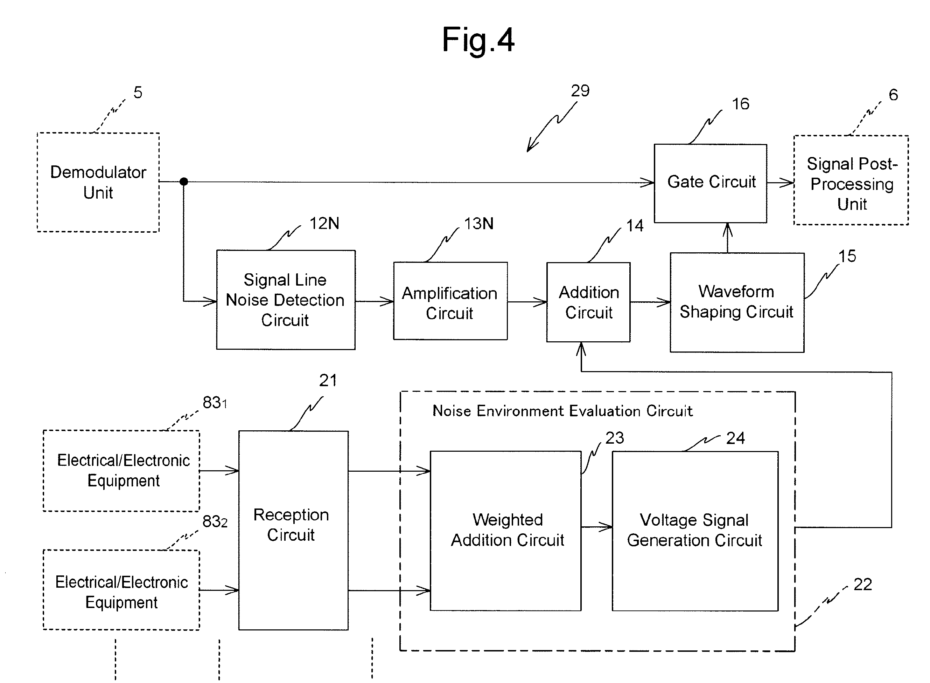

In the following, a second embodiment of the present invention will be explained with reference principally to Figs. 3 and 4. It should be understood that, in the following explanation, to elements which are the same as or equivalent to ones of the first embodiment described above, the same reference symbols will be affixed, and duplicated explanation will be omitted.

Fig. 3 schematically shows the configuration of an onboard radio receiver 20 which incorporates a noise canceller 29 according to a second embodiment of the present invention, and also shows the configuration peripheral to this radio received 20. As shown in Fig. 3, as compared to the radio receiver 10 described above, this radio receiver 20 differs only in the aspect that it comprises a noise canceller 29, instead of the noise canceller 19. Furthermore, the electrical equipment which is disposed in the vicinity of the radio receiver 20 differs from that in the case of the first embodiment in the aspect that it consists of items of electrical equipment 83₁, 83₂, ..., each of which notifies the noise canceller 29 of the fact that it is being powered (hereinafter this will be also termed "powered-up notification").

As shown in Fig. 4, as compared to the noise canceller 19 described above, this noise canceller 29 differs in the aspect that, instead of the power supply line noise detection circuit 12P and the amplification circuit 13P, it comprises a reception circuit 21 which receives a powered-up notification from each of the items of electrical equipment 83₁, 83₂, ..., and a noise environment evaluation circuit 22. This noise environment evaluation circuit 22 comprises: (i) a weighted addition circuit 23 which, along with allocating a weighting determined in advance to each of the items of electrical equipment which has issued a powered-up notification based upon the result of reception by the reception circuit 21, also allocates a weighting of zero to each of these items of electrical equipment which has not issued a powered-up notification, and adds these weighted values all together; and (ii) a voltage signal generation circuit 24 which generates a voltage signal corresponding to the result of addition by the weighted addition circuit 23.

Here, the weightings which are allocated by the weighted addition circuit 23 to each of the items of electrical equipment 83₁, 83₂, ... are determined in relation to the amounts of noise superimposed upon the signal output from the demodulation unit 5 due to the operation of the corresponding one of the items of electrical equipment 83₁, 83₂, ..., based upon experiment or simulation. Furthermore, the conversion coefficient in the voltage signal generation circuit 24 from the result of addition by the weighted addition circuit 23 to its output voltage value is determined by experiment or simulation or the like, from the point of view of elimination of the noise component by the entire noise canceller 29 in a logical manner. It should be understood that, if none of the items of electrical equipment 83₁, 83₂, ... issues a powered-up notification, so that the result of addition by the weighted addition circuit 23 is zero, then it is arranged for a voltage signal of 0 V to be outputted from the voltage signal generation circuit 24.

Next, the signal processing performed by the radio receiver 20 having the configuration described above will be explained, with emphasis being principally directed upon the operation of elimination of the noise component by the noise canceller 29.

In a manner similar to the case with the first embodiment, a signal which has been induced in the antenna 1 due to reception of a broadcast wave or the like is mixed with a local oscillation signal by the mixer unit, after having been amplified by the radio frequency amplification unit 2, and is thereby frequency converted to an intermediate frequency. The intermediate frequency signal which has been obtained in this manner is detected by the demodulation unit 5, after having been amplified by the intermediate frequency amplification unit 4. The signal which results from this detection by the demodulation unit 5 is inputted to the noise canceller 29.

In parallel with the processing in this manner of the signal which has been induced in the antenna 1, the power up notifications from each one of the items of electrical equipment 83₁, 83₂, ... which is powered up are supplied to the noise canceller 29. In the noise canceller 29, the reception circuit 21 which is provided before the noise environment evaluation circuit 22 receives these powered-up notifications. The results of reception by the reception circuit 21 are received by the weighted addition circuit 23. Here, if none of the items of electrical equipment 83₁, 83₂, ... is powered up, so that no such powered-up notifications are present, then, since the result of addition by the weighted addition circuit 23 as described above is zero, a voltage signal of 0 V is outputted from the voltage signal generation circuit 24. As a result, the result of addition by the addition circuit 14 becomes the same as the result of detection by the signal line noise detection circuit 12N and amplification by the amplification circuit 13N; and accordingly, due to this, just as in the case of the first embodiment described above, if none of the items of electrical equipment 83₁, 83₂, ... is powered up, then elimination of the noise component is performed by this noise canceller 29 with a similar noise cancellation sensitivity to that in the case of the prior art example described above.

If connection of at least one of the items of electrical equipment 82₁, 82₂, ... to the electrical power is commenced, then, when this at least one item of electrical equipment 82₁, 82₂, ... which has been connected to the electrical power operates, a powered-up notification is issued from this at least one item of electrical equipment 82₁, 82₂, .... In this case, after a weighting which is determined in advance has been allocated by the weighted addition circuit 23 to each of the items of electrical equipment which is powered up in the manner described above, these values are then all added together. A voltage signal of a voltage value which corresponds to the result of this addition by the weighted addition circuit 23 is generated by the voltage signal generation circuit 24. The voltage signal which is outputted from the voltage signal generation circuit 24 is added by the addition circuit 14 to the result of amplification by the amplification circuit 13N after detection by the signal line noise detection circuit 12N. In other words, the result of addition by the addition circuit 14 is a value which takes into consideration the operation of the item or item of electrical equipment 82₁, 82₂, ..., which could become a source of noise mixed into the signal from the radio receiver 10 (in particular, into the signal from the antenna 1).

In a similar manner to the case for the result of addition by the addition circuit 14 in the first embodiment, waveform shaping is performed by the waveform shaping circuit 15, and is inputted to the gate circuit 16 as a gate control signal. The gate circuit 16 determines the mode of the output signal to the signal post-processing unit 6 according to the level of the gate control signal, in a manner similar to the case in the first embodiment.

As explained above, with the noise canceller 29 of this embodiment, the noise environment evaluation circuit 22 receives a powered-up notification from each of the items of electrical equipment 83₁, 83₂, ..., and generates a voltage signal of a voltage value which reflects the noise environment due to those items of electrical equipment which are powered up. The voltage signal which is obtained in this manner is added by the addition circuit 14 to the result of detection by the signal line noise detection circuit 12n and amplification by the amplification circuit 13N. The noise component included in the input signal to the noise canceller 29 is eliminated, due to the operation of the gate circuit 16 corresponding to the level of a gate control signal which is generated by the waveform shaping circuit 15 based upon this result.

In other words, the noise cancellation sensitivity by the noise canceller 29 is changed according to the result of evaluation by the noise environment evaluation circuit 22. Accordingly, with the noise canceller 29 of this embodiment, it is possible to eliminate the noise component in the input signal in a logical manner.

It should be understood that, in the second embodiment described above, it was arranged to issue a powered-up notification from each of the items of electrical equipment 83₁, 83₂, .... By contrast it would also be possible, along with disposing various items of electronic equipment 82₁, 82₂, ... in the vicinity of the radio receiver 20 in a similar manner to the case in the first embodiment, also to arrange to detect whether each of these items of electrical equipment 82₁, 82₂, ... is powered up or not, by detecting the electrical current which is flowing from the DC power supply device 81 to each of these items of electrical equipment 82₁, 82₂.

Furthermore, in the second embodiment described above, it was arranged for digitally weighed addition to be performed by the noise environment evaluation circuit 22, and for a voltage corresponding to the result of this addition to be generated using some type of digital-analog converter (DAC). By contrast, it would also be possible to arrange, along with generating a voltage signal of a specific voltage value for each of the items of electrical equipment 83₁, 83₂, ... if that item of electrical equipment 83₁, 83₂, ... has issued a powered-up notification, also to output the result of adding together these voltage signals to the addition circuit 14.

It should be understood that, although in the first and second embodiments described above the present invention was applied to a noise canceller mounted to an onboard radio receiver, of course it would also be possible to apply the present invention to a noise canceller which is mounted to some other type of signal processing device.

## Claims

1. A noise canceller which eliminates a noise component included in an input signal comprising:
a signal line noise detection means which detects a component included in said input signal which is estimated as being noise;
a noise environment detection means which detects the operational state of at least one of electrical devices which could constitute a cause for superimposition of noise upon said input signal;
a correction means which corrects the result of detection by said signal line noise detection means, using the result of detection by said noise environment detection means; and
a noise elimination means which eliminates a noise component included in an input signal, based upon the result of correction by said correction means.

2. A noise canceller as described in Claim 1, wherein
said noise environment detection means detects noise upon a power supply line for supply of electrical power for the operation of said electrical device.

3. A noise canceller as described in Claim 2, wherein
said correction means performs weighted addition of the result of detection by said noise environment detection means and the result of detection by said signal line noise detection means.

4. A noise canceller as described in Claim 1, wherein
said noise environment detection means detects change of an electrical current flowing in a power supply line for supply of electrical power for the operation of said electrical device.

5. A noise canceller as described in Claim 4, wherein
said correction means performs weighted addition of the result of detection by said noise environment detection means and the result of detection by said signal line noise detection means.

6. A noise canceller as described in Claim 1, wherein
said noise environment detection means detects whether or not each of said electrical devices¹ is powered up.

7. A noise canceller as described in Claim 6, wherein
said correction means adds amounts corresponding to those ones among said electrical devices which are powered up, to the result of detection by said signal line noise detection means.
